# EUROPEAN PATENT SPECIFICATION

(11) **EP 4 015 976 B1**
(45) Date of publication and mention of the grant of the patent: **23.10.2024**
(21) Application number: 20461594.2
(22) Date of filing: 15.12.2020
(51) Int. Cl.: F28D 7/16, F02B 29/04, F28F 9/02

(54) **HEAT EXCHANGER**
WÄRMETAUSCHER
ÉCHANGEUR DE CHALEUR

(43) Date of publication of application: 22.06.2022
(73) Proprietor: Valeo Autosystemy SP. Z.O.O., 32-050 Skawina (PL)
(72) Inventor: BUREK, DARIUSZ, 32 050 Skawina (PL); GUT, Damian, 32 050 Skawina (PL); BOLEK, Kamil, 32 050 Skawina (PL); PLUSA, Tomasz, 32 050 Skawina (PL)
(74) Representative: Valeo Systèmes Thermiques

(56) References cited:
- EP-A1- 3 404 247
- WO-A1-2013/022072
- WO-A1-95/19536
- JP-A- 2000 088 477

## Description

The present invention generally relates to a heat exchanger, in particular to a heat exchanger provided with a deflector in an inlet tank of the heat exchanger for uniform distribution of fluid flowing therein. WO 2013/022072 discloses a heat exchanger having the features of the preamble of claim 1.

Heat exchangers, particularly charge air coolers, are provided in a vehicle at an air inlet circuit to cool the air flowing into an engine of the vehicle. Generally, the charge air cooler is connected downstream of a supercharger/turbocharger. The hot air received from the supercharger is cooled down at the charge air cooler, and the cooled air is provided to the engine. The charge air cooler may include two fluid circuits, one fluid circuit being the hot air flowing from the supercharger, and other fluid circuit being a coolant loop. Further, both fluid circuits are defined in a heat exchange configuration, so that the hot air exchanges heat with the coolant flowing therein. Further, the charge air cooler may include an inlet tank and an outlet tank to enable circulation of the hot air into a core of the charge air cooler. In some vehicles, the charge air cooler may be strategically positioned in order to optimally utilize the space in the vehicle. In such case, the supercharger and the charge air cooler may be in parallel with each other, so the inlet port may be angled to connect with the supercharger.

In such cases, the hot airflow entering into the inlet port may not uniformly distributed on the core of the charge air cooler. Further, the non-uniform distribution of the hot air on the core may lead to inefficient heat exchange between the coolant and the hot air that results in inefficient performance of the charge air cooler. In other cases, an air duct connecting the inlet port of the charge air cooler may be angled or U-shaped, due to arrangement of various components connected in the air inlet circuit. Further, the hot airflow entering into the housing may not be homogenous on the cross-section of the core, due to non-symmetrical inlet port or a curvature of flow path in the inlet tank. Such non-uniform distribution of airflow leads to inefficient heat exchange and thermal performance. Further, there is a possibility of thermal shock issue on the charge air cooler due to the non-uniform distribution of air at the inlet, which may damage the parts of the charge air cooler.

Accordingly, there remains a need for an inlet tank or port that enables uniform distribution of airflow on a core of a charge air cooler. Further, there remains another need for a charge air cooler having an angled inlet with features to enable uniform distribution of fluid on the core of the charge air cooler.

In the present description, some elements or parameters may be indexed, such as a first element and a second element. In this case, unless stated otherwise, this indexation is only meant to differentiate and name elements which are similar but not identical. No idea of priority should be inferred from such indexation, as these terms may be switched without betraying the invention. Additionally, this indexation does not imply any order in mounting or use of the elements of the invention.

In view of the foregoing, the present invention relates to a heat exchanger according to claim 1.

Further, the deflector includes a base portion and the flap is connected to the base portion.

The heat exchanger further includes at least one protruded portions, in particular two protruded portions, formed on adjacent sides of the flap and protruding from the base portion of the deflector.

Further, the protruded portion protrudes from the base portion of the deflector in a direction towards the core of the heat exchanger.

Further, the protruded portions are inclined towards the flap.

In one embodiment, the flap and at least one protruded portion are angled at different angles on a same plane.

In another embodiment, the flap and at least one protruded portion are inclined on parallel planes.

Further, an end portion of the flap is bent at an angle with respect to the body of the flap.

In one embodiment, the deflector is connected to an inner wall of the inlet tank.

Other characteristics, details and advantages of the invention can be inferred from the description of the invention hereunder. A more complete appreciation of the invention and many of the attendant advantages thereof will be readily obtained as the same becomes better understood by reference to the following detailed description when considered in connection with the accompanying figures, wherein:
Fig. 1 illustrates a schematic view of a heat exchanger, in accordance with an embodiment of the present invention;
Fig. 2 illustrates a perspective view of an inlet tank nozzle of the heat exchanger of Fig. 1;
Fig. 3 illustrates a front view of the inlet tank nozzle of the heat exchanger showing a deflector of Fig. 2;
Fig. 4 illustrates a perspective view of the deflector of the inlet tank of Fig. 3; and
Fig. 5 illustrates a perspective view of the inlet tank nozzle of the heat exchanger of Fig. 2.

It must be noted that the figures disclose the invention in a detailed enough way to be implemented, said figures helping to better define the invention if needs be. The invention should however not be limited to the embodiment disclosed in the description.

The present invention generally relates a charge air cooler provided with a deflector in an inlet tank of the charge air cooler to enable uniform distribution of air on a core of the charge air cooler. In conventional charge air cooler, the inlet air duct may be bent or in non-symmetrical shape, so the air entering into a housing of the charge air cooler may non-uniformly distributed in the inlet area of the core that leads to inefficient heat exchange between the air and a coolant and leads to thermal shock. To avoid such scenario, a deflector is provided in the inlet tank that uniformly distribute the air on a core provided in a housing of the charge air cooler. Further, the geometry and placement of the deflector is explained with respect to the following figures.

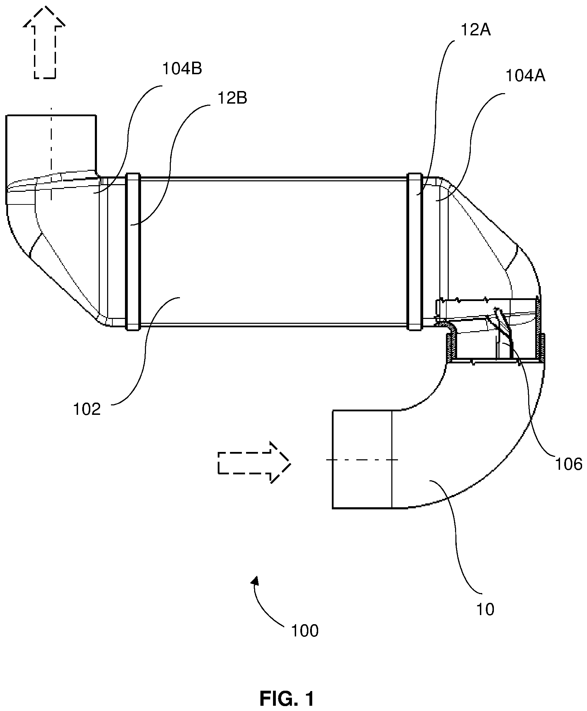

Fig. 1 illustrates a schematic view of a heat exchanger 100, in accordance with an embodiment of the present invention. The heat exchanger 100 can be a charge air cooler or any other heat exchanger. In the present embodiment, the heat exchanger 100 is a charge air cooler. The charge air cooler 100 includes a core (not shown in Fig. 1), a housing 102 accommodating the core, an inlet tank 104A and an outlet tank 104B. The inlet tank 104A is connected to a first header 12A and the outlet tank 104B is connected to a second header 12B. The first header and the second header 12A-B are fluidically connected to heat exchange elements (not shown in Fig) of the core. In other words, a cooling fluid may flow from the first header 12A to the second header 12B through the heat exchange elements. Further, the inlet tank 104A and the outlet tank 104B are fluidically connected to the heat exchange elements to enable a first fluid flow, preferably airflow over the heat exchange elements. Further, a second fluid flow, preferably a coolant, flows into the heat exchange elements. The first fluid flow and the second fluid flow are defined in the housing in such a way that the first fluid flow is adapted to exchange heat with the second fluid flow. The inlet tank 104A is connected to an inlet conduit 10, which may be angled due to various requirements. As the inlet conduit 10 is angled, the first fluid flow, hereinafter referred to as air flow, entering into the housing 102 is non-uniform at the inlet area of the core. To avoid non-uniform distribution air on the core of the, a deflector 106 is provided within the inlet tank 104A. The deflector 106 is adapted to uniformly distribute the first fluid onto the core of the charge air cooler.

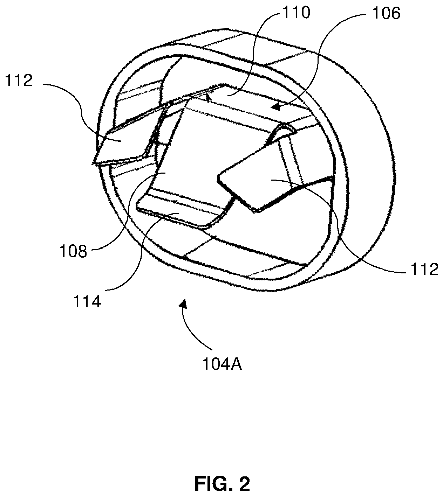

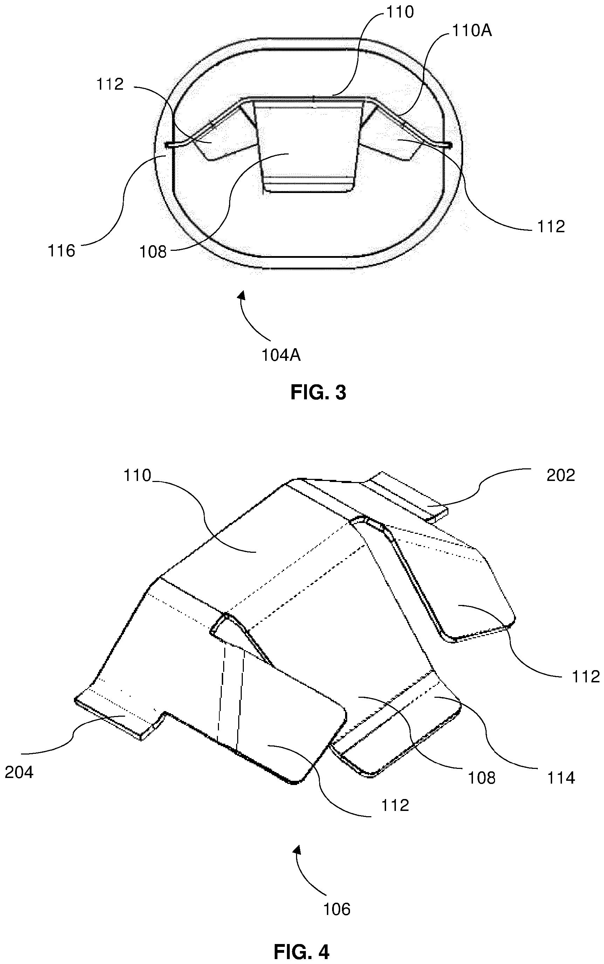

Figs. 2 and 3 illustrate different views of the inlet tank 104A of the charge air cooler 100 of Fig. 1 showing the deflector 106. In one example, Fig. 2 illustrates a perspective view of the inlet tank nozzle 104A of Fig. 1 and Fig. 3 illustrates a front view of the inlet tank 104A of Fig. 1. The charge air cooler 100 includes at least one deflector 106 provided within the inlet tank 104A to uniformly distribute the first fluid entering into the inlet tank 104A on the core of the charge air cooler 100. In one embodiment, the at least one deflector 106 includes at least one flap 108 inclined at an angle towards the core of the charge air cooler 100. In other words, the flap 108 is angled with respect to the conduit in which it is mounted and points towards the core. Although the inlet tank 104A of the proposed invention is explained with at least one deflector 106, it is possible to configure more than one deflector 106 within the inlet tank 104A. Further, the at least one deflector 106, hereinafter referred to as deflector 106, includes a base portion 110 in which the at least one flap 108, hereinafter referred to as flap, is connected thereto.

The base portion 110 may be rectangular and comprise protruding end portions 110A, which may be bent at angle with respect to the base portion 110. In other words, both lateral ends of the base portion 110, which is in vicinity to the inner wall of the inlet tank 104A and serve as mounting portions for the base portion 110, are bent at angle with respect to it and the conduit walls to which it is mounted. The end portions 110A of the base portion 110 is connected to the inner wall 116 of the inlet tank 104A. The base portion 110 further includes protruded portions 112 formed on adjacent sides of the flap 108 and protruding from the base portion 110 of the deflector 106. In particular, the protruded portions 112 are formed on the end portions 110A of the base portion 110. In one example, the deflector 106 includes two protruded portions 112 formed on the both end portions 110A of the base portion 110. In such example, the two protruded portion 112 are inclined with respect to the base portion 110 and towards each other. In another example, at least one protruded portion 112 is coupled to any one of the end portions 110A of the base portion 110 of the deflector 106. In such example, the at least one protruded portion 112 is inclined towards the flap 108 of the deflector 106. Further, the protruded portions 112 are protruded from the base portion 110 in a direction towards the core. In other words, the protruded portions 112 are protruded from the base portion 110 generally in the same direction as the flap 108 protruding therefrom, but in a differing orientation with respect to the conduit.

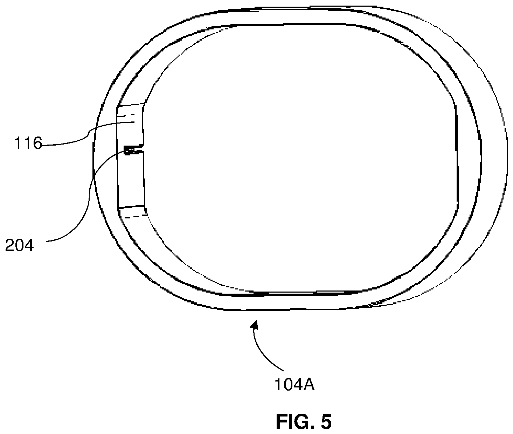

Fig. 4 illustrates a perspective view of the deflector of Fig. 2 depicting the flap 108 and the protruded portions 112, and Fig. 5 illustrates a perspective view of inlet tank nozzle 104A depicting the inner wall 116. The flap 108 and the protruded portions 112 are angled at different angles on a same plane. In one example, the flap 108 is bent more than of the protruded portions 112, in such a way that the protruded portions 112 are in a plane above the flap 108. In another example, the flap 108 and the protruded portions 112 are inclined on parallel planes. Further, the base portion 110 of the deflector 106 includes tongues 202 formed on the end portions 110A of the base portion 110 and adapted to be received in slots 204 formed on the inner wall 116 of the inlet tank 104A. As shown in Fig. 5, the slots 204 are formed on the inner wall 116 of the inlet tank 104A, corresponding to the tongues 202 formed in the base portion 110 of the deflector 106. In another embodiment, the deflector 106 is brazed to the inner wall 116 of the inlet tank 104A. In yet another embodiment, the inner wall 116 of the inlet tank 104A is provided with an "O" ring, on which the end portions 110A of the deflector 106 is connected thereto. Further, an end portion 114 of the flap 108 is bent at an angle with respect to the body of the flap 108.

In order to attain homogenous fluid distribution on the core of the charge air cooer 100, the deflector 106 may divert the first fluid across the heat exchange elements. As the deflector 106 is provided in the inlet tank 104A, the first fluid flowing into the inlet tank 104A is uniformly distributed on the core by directing the fluid at desired location of the heat exchange elements. At the core, the first fluid exchanges the heat with the second fluid entering into the heat exchange elements. As the first fluid, e.g., hot air, uniformly distributed on the inlet side of the core, the heat exchange between the first fluid and the second fluid can be optimum, thereby attaining optimal thermal efficiency of the charge air cooler 100.Thereafter, the first fluid exits the housing 102 through the outlet tank 104B. Although the deflector 106 is defined in the charge air cooler 100 to enable uniform distribution of fluid on the core, the deflector 106 can be defined in any other heat exchanger to enable uniform distribution at an inlet area of the core of the heat exchanger.

All the above-described embodiments are just to explain the present invention while more embodiments and combinations thereof might exist. Hence, the present invention should not be limited to the above-described embodiments alone.

## Claims

1. A heat exchanger (100) comprising: a core, a housing (102) connected with an inlet tank (104A), said core being accommodated in said housing; and at least one deflector (106) provided within the inlet tank (104A), wherein the deflector (106) comprises at least one flap (108) inclined towards the core of the heat exchanger (100), **characterised in that** the inner wall (116) of the inlet tank (104A) is provided with slots (204) and tongues (202) formed on the deflector (106) are received in the slots (204).

2. The heat exchanger (100) as claimed in claim 1, wherein the deflector (106) further comprises a base portion (110), the flap (108) being connected to the base portion (110).

3. The heat exchanger (100) as claimed in claim 2, further comprising at least one protruded portion (112), in particular two protruded portions (112), formed on adjacent sides of the flap (108) and protruding from the base portion (110) of the deflector (106).

4. The heat exchanger (100) as claimed in claim 3, wherein the protruded portion (112) protrudes from the base portion (110) of the deflector (106) in a direction towards the core of the heat exchanger (100).

5. The heat exchanger (100) as claimed in any of the claims 3 and 4, wherein the protruded portions (112) are inclined towards the flap (108).

6. The heat exchanger (100) as claimed in any of the claims 3 to 5, wherein the flap (108) and at least one protruded portion (112) are angled at different angles within the same plane.

7. The heat exchanger (100) as claimed in any of the claims 3 to 5, wherein the flap (108) and at least one protruded portion (112) are inclined on parallel planes.

8. The heat exchanger (100) as claimed in any of the preceding claims, wherein an end portion (114) of the flap (108) is bent at an angle with respect to the body of the flap (108).

## Patentansprüche

1. Wärmetauscher (100), umfassend: einen Kern, ein Gehäuse (102), das mit einem Einlasstank (104A) verbunden ist, wobei der Kern in dem Gehäuse untergebracht ist,
und mindestens einen in dem Einlasstank (104A) vorgesehenen Umlenker (106), wobei der Umlenker (106) mindestens eine Klappe (108) umfasst, die zu dem Kern des Wärmetauschers (100) hin geneigt ist,
**dadurch gekennzeichnet, dass** die Innenwand (116) des Einlasstanks (104A) mit Schlitzen (204) versehen ist und an dem Umlenker (106) ausgebildete Zungen (202) in den Schlitzen (204) aufgenommen sind.

2. Wärmetauscher (100) nach Anspruch 1, wobei der Umlenker (106) ferner einen Basisabschnitt (110) umfasst, wobei die Klappe (108) mit dem Basisabschnitt (110) verbunden ist.

3. Wärmetauscher (100) nach Anspruch 2, ferner umfassend mindestens einen vorragenden Abschnitt (112), insbesondere zwei vorragende Abschnitte (112), die an benachbarten Seiten der Klappe (108) ausgebildet sind und von dem Basisabschnitt (110) des Umlenkers (106) vorragen.

4. Wärmetauscher (100) nach Anspruch 3, wobei der vorragende Abschnitt (112) von dem Basisabschnitt (110) des Umlenkers (106) in eine Richtung zu dem Kern des Wärmetauschers (100) hin vorragt.

5. Wärmetauscher (100) nach einem der Ansprüche 3 und 4, wobei die vorragenden Abschnitte (112) zu der Klappe (108) hin geneigt sind.

6. Wärmetauscher (100) nach einem der Ansprüche 3 bis 5, wobei die Klappe (108) und mindestens ein vorragender Abschnitt (112) in unterschiedlichen Winkeln in derselben Ebene abgewinkelt sind.

7. Wärmetauscher (100) nach einem der Ansprüche 3 bis 5, wobei die Klappe (108) und mindestens ein vorragender Abschnitt (112) auf parallelen Ebenen geneigt sind.

8. Wärmetauscher (100) nach einem der vorhergehenden Ansprüche, wobei ein Endabschnitt (114) der Klappe (108) bezüglich des Körpers der Klappe (108) in einem Winkel gebogen ist.

## Revendications

1. Échangeur de chaleur (100) comprenant : un noyau, un boîtier (102) relié à un réservoir d'entrée (104A), ledit noyau étant logé dans ledit boîtier ;
et au moins un déflecteur (106) placé à l'intérieur du réservoir d'entrée (104A), le déflecteur (106) comprenant au moins un volet (108) incliné vers le noyau de l'échangeur de chaleur (100),
**caractérisé en ce que** la paroi interne (116) du réservoir d'entrée (104A) est pourvue de fentes (204) et des languettes (202) formées sur le déflecteur (106) sont reçues dans les fentes (204).

2. Échangeur de chaleur (100) selon la revendication 1, le déflecteur (106) comprenant en outre une partie de base (110), le volet (108) étant relié à la partie de base (110).

3. Échangeur de chaleur (100) selon la revendication 2, comprenant en outre au moins une partie saillante (112), en particulier deux parties saillantes (112), formées sur des côtés adjacents du volet (108) et faisant saillie à partir de la partie de base (110) du déflecteur (106) .

4. Échangeur de chaleur (100) selon la revendication 3, la partie saillante (112) faisant saillie à partir de la partie de base (110) du déflecteur (106) dans une direction orientée vers le noyau de l'échangeur de chaleur (100).

5. Échangeur de chaleur (100) selon l'une quelconque des revendications 3 et 4, les parties saillantes (112) étant inclinées vers le volet (108).

6. Échangeur de chaleur (100) selon l'une quelconque des revendications 3 à 5, le volet (108) et au moins une partie saillante (112) étant inclinés selon des angles différents dans le même plan.

7. Échangeur de chaleur (100) selon l'une quelconque des revendications 3 à 5, le volet (108) et au moins une partie saillante (112) étant inclinés sur des plans parallèles.

8. Échangeur de chaleur (100) selon l'une quelconque des revendications précédentes, une partie d'extrémité (114) du volet (108) étant courbée selon un angle par rapport au corps du volet (108).
